(19) Europäisches Patentamt / European Patent Office / Office européen des brevets

(11) **EP 2 493 712 B1**

(12) **FASCICULE DE BREVET EUROPEEN**

(45) Date de publication et mention de la délivrance du brevet:
**15.07.2015 Bulletin 2015/29**

(21) Numéro de dépôt: **10768011.8**

(22) Date de dépôt: **15.10.2010**

(51) Int Cl.:
***B60H 1/32*** (2006.01)

(86) Numéro de dépôt international:
**PCT/EP2010/065556**

(87) Numéro de publication internationale:
**WO 2011/051119 (05.05.2011 Gazette 2011/18)**

(54) **PROCÉDÉ DE CONTRÔLE DU FONCTIONNEMENT D'UNE BOUCLE DE CLIMATISATION D'UN VÉHICULE**

VERFAHREN ZUR STEUERUNG DES BETRIEBS EINES KLIMATISIERIERUNGSKREISLAUFES IN EINEM FAHRZEUG

METHOD FOR CONTROLLING THE OPERATION OF AN AIR-CONDITIONING LOOP IN A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2009 FR 0905146**

(43) Date de publication de la demande:
**05.09.2012 Bulletin 2012/36**

(73) Titulaire: **VALEO SYSTEMES THERMIQUES**
**78321 Le Mesnil Saint Denis Cedex (FR)**

(72) Inventeur: **LIU, Jin-Ming**
**F-78770 Conflans Saint Honorine (FR)**

(74) Mandataire: **Vieillevigne, Sébastien Nicolas Bernard**
**VALEO SYSTEMES THERMIQUES**
**Service Propriété Industrielle**
**8, rue Louis Lormand**
**La Verrière - B.P. 513**
**78321 Le Mesnil-Saint-Denis Cedex (FR)**

(56) Documents cités:
**EP-A1- 1 459 920       EP-A2- 1 749 681**
**DE-A1- 10 355 317       DE-A1- 19 743 828**

**Description**

La présente invention se rapporte au domaine général des procédés de contrôle du fonctionnement d'une boucle de climatisation d'un véhicule dans laquelle circule un fluide réfrigérant sous-critique et comprenant, dans le sens de circulation du fluide réfrigérant, notamment un compresseur, un condenseur, un organe de détente et un évaporateur.

Dans de telles boucles de climatisation, le compresseur est généralement contrôlé de manière externe selon une loi reliant la pression à l'entrée du compresseur à l'intensité d'un courant de commande d'une vanne de contrôle du compresseur.

L'invention concerne également les boucles de climatisation comprenant un échangeur interne pour la réalisation d'échanges thermiques entre le fluide circulant entre le condenseur et l'organe de détente et le fluide circulant entre l'évaporateur et le compresseur.

Une telle architecture permet de réduire la consommation de la boucle de climatisation. Une telle réduction de consommation entraîne avantageusement une réduction de la pollution due au fonctionnement de la boucle de climatisation. De plus, la présence d'un échangeur interne augmente la puissance de refroidissement de la boucle de climatisation.

Néanmoins, il a été observé qu'une telle disposition peut provoquer une surchauffe excessive du fluide réfrigérant circulant dans la boucle de climatisation à la sortie du compresseur. Ce phénomène se produit lorsque l'efficacité de l'échangeur interne est élevée dans certaines conditions d'opérations de la boucle de climatisation. Aussi, il est nécessaire, dans un tel cas, de contrôler la température à l'entrée du condenseur ou à la sortie du compresseur.

A cet effet, pour contrôler la température de décharge du compresseur ou à l'entrée du condenseur, il existe actuellement deux solutions.

Selon une première méthode, une ouverture de l'organe de détente est définie de telle sorte qu'une surchauffe quasiment nulle soit réalisée à la sortie de l'évaporateur. Cette solution est simple mais présente des risques puisqu'elle est basée sur l'hypothèse que la température de décharge du compresseur est satisfaisante sans y appliquer de contrôle.

La seconde méthode consiste à utiliser un capteur de température à la sortie du compresseur et de mettre en oeuvre un procédé de contrôle utilisant la valeur mesurée par le capteur de température pour limiter la température de décharge du compresseur. Cette solution présente l'inconvénient de nécessiter l'équipement de la boucle de climatisation avec un capteur supplémentaire, représentant un coût non négligeable.

La présente invention a donc pour but principal de palier les inconvénients des solutions connues en proposant un procédé de contrôle de la température de sortie d'un compresseur intégré dans une boucle de climatisation d'un véhicule automobile dans laquelle circule un fluide frigorigène sous critique, et comprenant au moins un compresseur, un condenseur, une vanne d'expansion et un évaporateur.

Selon une autre variante de réalisation, la boucle de climatisation comprend un échangeur interne pour la réalisation d'échanges thermiques entre le fluide circulant entre le condenseur et la vanne d'expansion et le fluide circulant entre l'évaporateur et le compresseur.

Le procédé de contrôle comprend, successivement, simultanément ou alternativement :

- une étape de calcul d'une température limite à l'entrée du compresseur,
- une étape d'estimation d'une température à l'entrée du compresseur,
- une étape d'acquisition d'une vitesse du véhicule, d'une température extérieure et de la pression mesurée en sortie du condenseur,
- une étape d'acquisition d'une tension d'un groupe moto-ventilateur générant un flux d'air traversant le condenseur,
- une étape d'acquisition d'une pression à la sortie du condenseur, d'une pression estimée à l'entrée du compresseur, d'une vitesse du compresseur et d'une température limite prédéfinie à l'entrée du condenseur ou à la sortie du compresseur,
- une étape d'acquisition d'une intensité du courant de commande de la vanne de contrôle du compresseur, une étape d'estimation de la pression à l'entrée du compresseur étant réalisée en fonction d'une intensité du courant de commande de la vanne de contrôle du compresseur,
- une étape de détermination d'un paramètre d'efficacité de l'échangeur interne, préférentiellement réalisée en fonction d'un flux massique du fluide réfrigérant,
- une étape de détermination du flux massique réalisée en fonction de la vitesse du véhicule, de la température extérieure, et de la pression mesurée en sortie du condenseur,
- une étape d'estimation d'une pression estimée à la sortie de l'évaporateur à partir de la pression estimée à l'entrée du compresseur et du flux massique du fluide réfrigérant,
- une étape d'estimation d'une chute de pression entre la sortie de l'évaporateur et l'entrée du compresseur à partir du flux massique du fluide réfrigérant,
- une étape de détermination de caractéristiques de surchauffe en fonction de la pression estimée à la sortie de l'évaporateur,

- une étape d'estimation de la température à la sortie de l'évaporateur à partir de caractéristiques de surchauffe et de la pression estimée en sortie de l'évaporateur, et
- une étape de modification d'un signal de commande du compresseur ou d'une valeur de consigne de la température d'évaporation.

Selon la présente invention, l'étape de calcul de la température limite à l'entrée du compresseur est réalisée en fonction de la pression estimée à l'entrée du compresseur, de la vitesse du compresseur, et de la température limite prédéfinie à l'entrée du condenseur ou à la sortie du compresseur.

Par ailleurs, le procédé de contrôle prévoit que l'étape d'estimation de la pression à la sortie de l'évaporateur est réalisée en fonction de la chute de pression et de la pression estimée à l'entrée du compresseur.

Selon un premier mode de réalisation, la présente invention prévoit également que le procédé de contrôle comprend :

- une étape d'estimation de la température à la sortie de l'évaporateur à partir d'une température de saturation à la pression estimée en sortie de l'évaporateur et des caractéristiques de la surchauffe,
- une étape d'estimation d'une température limite à l'entrée du compresseur à partir du paramètre d'efficacité de l'échangeur, de la température de saturation correspondant à la pression en entrée du condenseur ou en sortie du compresseur et de la température en sortie de l'évaporateur estimée, et
- une étape d'estimation d'une pression limite à la sortie du condenseur à partir de la température limite à la sortie du condenseur.

Selon ce premier mode de réalisation, l'étape de modification est telle que le signal de commande du compresseur ou la valeur de consigne de la température d'évaporation est modifiée dès lors que la température à l'entrée du compresseur estimée est supérieure ou égale à la température limite à l'entrée du compresseur calculée.

Selon un deuxième mode de réalisation, le procédé de contrôle comprend, également :

- une étape de calcul d'une température limite à la sortie de l'évaporateur à partir du paramètre d'efficacité de l'échangeur, de la température limite à l'entrée du compresseur et de la température de saturation à la pression en entrée du condenseur ou à la sortie du compresseur,
- une étape de calcul d'une pression limite à la sortie de l'évaporateur à partir de la température limite à la sortie de l'évaporateur et des caractéristiques de la surchauffe,
- une étape de calcul d'une pression limite en entrée du compresseur à partir de la pression limite à la sortie de l'évaporateur et de la chute de pression estimée, et
- une étape de calcul d'une valeur limite de l'intensité du courant de commande de la vanne de contrôle du compresseur en fonction de la pression limite en entrée du compresseur.

L'étape de modification est telle que le signal de commande pour la vanne de contrôle du compresseur est modifiée pour que l'intensité du courant de commande de la vanne de contrôle du compresseur soit toujours inférieure à la valeur limite de l'intensité du courant de commande de la vanne de contrôle du compresseur. Si l'intensité mesurée est supérieure à la valeur limite de l'intensité du courant de commande de la vanne de contrôle du compresseur, le procédé contrôle réduit le signal de commande pour la vanne de contrôle du compresseur afin que l'intensité mesurée soit inférieure à la valeur limite de l'intensité du courant de commande de la vanne de contrôle du compresseur.

Selon un troisième mode de réalisation, la présente invention prévoit également que le procédé de contrôle comprend :

- une étape d'estimation de la température à la sortie de l'évaporateur à partir d'une température de saturation à la pression estimée en sortie de l'évaporateur et des caractéristiques de la surchauffe,
- une étape d'estimation d'une température limite à la sortie du condenseur à partir du paramètre d'efficacité, de la température à la sortie de l'évaporateur estimée et de la température limite à l'entrée du compresseur, et
- une étape d'estimation d'une pression limite à la sortie du condenseur à partir de la température limite à la sortie du condenseur.

Selon ce troisième mode de réalisation, l'étape de modification est telle que le signal de commande du compresseur ou la valeur de consigne de la température d'évaporation est modifiée dès lors que la pression à la sortie du condenseur est supérieure ou égale à la pression limite à la sortie du condenseur.

Par ailleurs, le procédé de contrôle selon la présente invention peut prévoir également :

- une étape d'acquisition d'une pression à l'entrée du condenseur ou à la sortie du compresseur et d'une température de l'air dans l'évaporateur, et
- une étape de calcul d'une température limite à l'entrée du compresseur en fonction de la valeur limite prédéfinie de la température à l'entrée du condenseur ou à la sortie du compresseur, de la pression à la sortie du condenseur, de la pression estimée à l'entrée du compresseur et de la vitesse du compresseur.

L'invention propose donc de contrôler la température de décharge du compresseur indépendamment de l'utilisation d'un capteur de température à l'entrée du condenseur ou à la sortie du compresseur. Cela permet que la boucle de climatisation comprenant un échangeur interne soit contrôlée avec exactement les mêmes capteurs qu'une boucle de climatisation ne comprenant pas un tel échangeur interne. Ainsi, les capteurs utilisés sont donc un capteur de pression à la sortie du condenseur, une mesure de température de l'air dans l'évaporateur et la valeur du courant de commande de la vanne de contrôle du compresseur.

La présente invention propose donc une étape de modification du signal de commande du compresseur ou la valeur de consigne de la température d'évaporation, indépendamment de la présence ou non d'un capteur de température à l'entrée du condenseur, par décrémentation, dès lors qu'une grandeur liée à la température à l'entrée du compresseur calculée en fonction des données acquises est supérieure à une grandeur limite calculée en fonction des données acquises.

Selon le principe de l'invention, le signal de commande du compresseur ou la valeur de consigne de la température d'évaporation est modifié(e) en fonction d'une comparaison d'une grandeur estimée représentative de la température à la sortie du compresseur ou en entrée du condenseur avec une grandeur limite.

Selon la présente invention, l'étape de détermination d'un flux massique de fluide est réalisée à partir d'un modèle du condenseur utilisant, notamment une mesure de la vitesse du véhicule, une mesure de la température extérieure, une mesure de la tension d'un groupe moto-ventilateur générant un flux d'air traversant le condenseur et la pression à l'entrée du compresseur pour déterminer le flux massique. Cette caractéristique permet une détermination du flux massique aisée à partir de paramètres connus par un microprocesseur centralisateur des données de fonctionnement du véhicule et de la boucle de climatisation.

D'autres caractéristiques et avantages de la présente invention apparaîtront à l'examen de la description qui va suivre, en référence aux dessins annexés, donnés à titre d'exemples non limitatifs, qui pourront servir à compléter la compréhension de la présente invention et l'exposé de sa réalisation mais aussi, le cas échéant, contribuer à sa définition sur lesquels:

- la figure 1 présente une boucle de climatisation selon la présente invention,
- la figure 2 présente un organigramme du procédé de contrôle du compresseur intégré dans une boucle de climatisation selon la figure 1 selon la présente invention,
- la figure 3 montre une courbe présentant l'évolution d'un paramètre d'efficacité de l'échangeur interne en fonction du flux massique selon la présente invention, et
- la figure 4 montre un tableau regroupant des données résultant de l'application du procédé selon la présente invention.

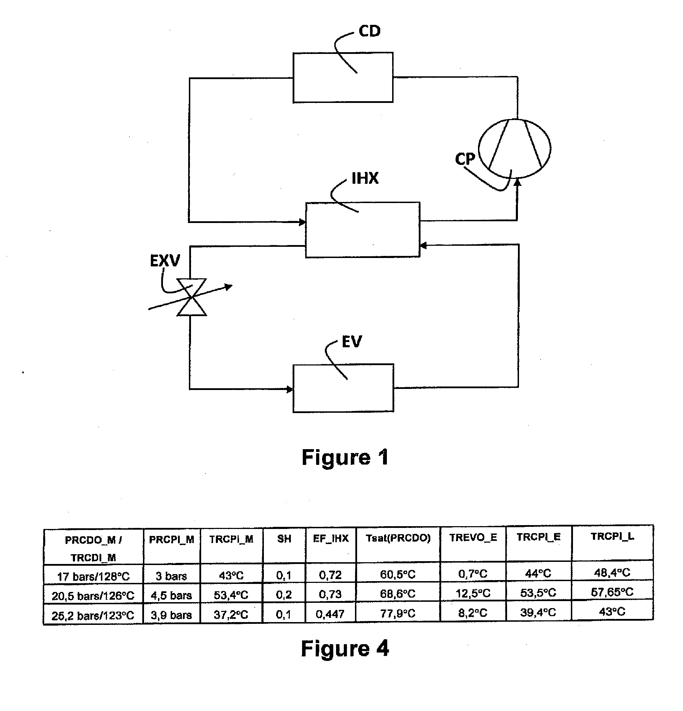

La figure 1 est une représentation schématique d'une boucle de climatisation dans laquelle peut être contrôlée par la présente invention. La boucle de climatisation est parcourue par un fluide réfrigérant subissant un cycle thermodynamique défini par l'intermédiaire des divers composants intégrés à la boucle de climatisation. Sur la figure 1, la boucle de climatisation comporte, dans le sens de circulation du fluide réfrigérant, un compresseur CP, un condenseur CD, un organe de détente EXV et un évaporateur EV.

La boucle de climatisation peut comprendre également, de façon optionnelle, un échangeur interne IHX. L'échangeur interne IHX permet un échange thermique entre, d'une part, le fluide réfrigérant circulant entre l'évaporateur EV et le compresseur CP et, d'autre part, le fluide réfrigérant circulant entre le condenseur CD et l'organe de détente EXV. L'échangeur interne IHX permet d'améliorer le coefficient de performance de la boucle de climatisation.

La boucle de climatisation est associée à un groupe moto-ventilateur (non représenté) permettant de générer un flux d'air traversant le condenseur CD afin de procéder à un échange de chaleur entre le fluide réfrigérant transitant dans le condenseur CD et le flux d'air traversant le condenseur CD pour évacuer la chaleur produite.

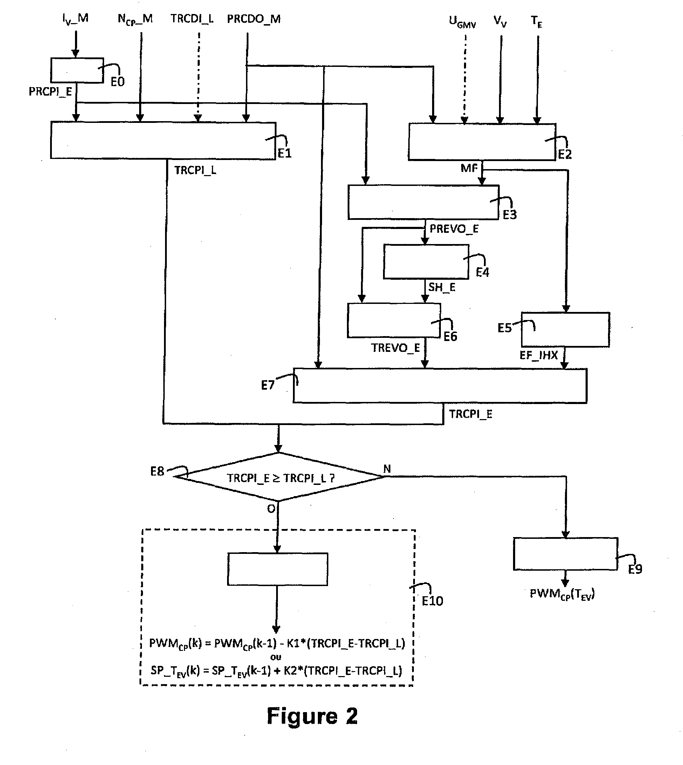

La figure 2 montre un organigramme d'un procédé de contrôle de la température d'entrée du compresseur CP de la boucle de climatisation selon un premier mode de réalisation de l'invention.

Suivant la présente invention, le procédé de contrôle comprend une acquisition de plusieurs paramètres, notamment :

- une intensité d'un courant de commande d'une vanne de contrôle du compresseur $I_V\_M$,
- une vitesse du compresseur $N_{CP}\_M$,

- une pression mesurée à la sortie du condenseur PRCDO_M, ou à la sortie du compresseur PRCPO_M.

Par ailleurs, le procédé de contrôle peut également comprendre une étape d'acquisition de la pression à l'entrée du condenseur PRCDI_M.

Par ailleurs, une température limite à la sortie du compresseur TRCDO_L est prédéfinie. Préférentiellement, la température limite à la sortie du compresseur TRCDO_L est établie à 130°C.

Le procédé de contrôle comprend une étape E0 d'estimation de la pression à l'entrée du compresseur PRCPI_E en fonction de :

- l'intensité du courant de commande de la vanne de contrôle du compresseur $I_V$_M,

selon la caractéristique de contrôle du compresseur CP.

Le procédé comprend ensuite une étape E1 de calcul d'une température limite à l'entrée du compresseur TRCPI_L en fonction d'une température limite prédéfinie à l'entrée du condenseur TRCDI_L, de la pression mesurée à la sortie du condenseur PRCDO_M, de la pression estimée à l'entrée du compresseur PRCPI_E obtenue à l'étape E0, et de la vitesse du compresseur $N_{CP}$_M.

Le calcul de la température limite à l'entrée du compresseur TRCPI_L est avantageusement de la forme :

$$TRCPI\_L = \frac{TRCDI\_L}{\left(\dfrac{PRCDO\_M}{PRCPI\_M}\right)^{\frac{\lambda-1}{\lambda}}} + f1$$

où PRCPI_M est une pression mesurée à l'entrée du compresseur, et

$\lambda$    est une constante,
f1    est une fonction dépendante de :

- la vitesse du compresseur $N_{CP}$_M,
- une pression mesurée à la sortie du condenseur PRCDO_M, et
- la pression estimée à l'entrée du compresseur PRCPI_E.

En particulier, la pression mesurée à la sortie du condenseur PRCDO_M est égale à la pression mesurée à l'entrée du condenseur PRCDI_M.

Le procédé selon l'invention comprend également une étape E2 de détermination d'un flux massique MF du fluide réfrigérant à partir d'un modèle de fonctionnement du condenseur CD. L'étape E2 peut être réalisé préalablement, en simultanée ou après les étapes E0 et/ou E1.

Avantageusement, et ainsi qu'illustré sur la figure 2, le modèle de fonctionnement du condenseur CD permet d'estimer le flux massique MF du fluide réfrigérant à partir d'une vitesse du véhicule $V_V$, d'une température extérieure $T_E$ et de la pression mesuré en sortie du condenseur PRCOO_M. En complément des paramètres listés précédemment, le modèle de fonctionnement du condenseur CD permet d'estimer le flux massique MF du fluide réfrigérant à partir également d'une tension $U_{GMV}$ du groupe moto-ventilateur générant le flux d'air traversant le condenseur CD,

A la suite de l'étape E2, l'invention prévoit une étape E3 d'estimation d'une pression estimée à la sortie de l'évaporateur PREVO_E à partir de la pression estimée à l'entrée du compresseur PRCPI_E obtenu à l'étape E0 et d'une chute de pression $\Delta P_{EV\_CP}$ entre la sortie de l'évaporateur EV et l'entrée du compresseur CP.

La chute de pression $\Delta P_{EV\_CP}$ est estimée à partir du flux massique MF déterminé à l'étape E2. Ainsi, la pression estimée à la sortie de l'évaporateur PREVO_E est donnée par la relation :

$$PREVO\_E = PRCPI\_E + \Delta P_{EV\_CP}$$

La pression estimée à la sortie de l'évaporateur PREVO_E est utilisée avec les caractéristiques du point de fonctionnement de l'organe de détente EXV dans une étape E4 pour déterminer des caractéristiques de surchauffe statique SH_E. Les caractéristiques de la surchauffe statique SH_E comprennent une surchauffe statique SH et un décalage de la surchauffe $\Delta$SH, par exemple compris entre 0 et 10°K. Ainsi, la surchauffe statique SH_E est donnée par la relation :

$$SH\_E = SH + \Delta SH.$$

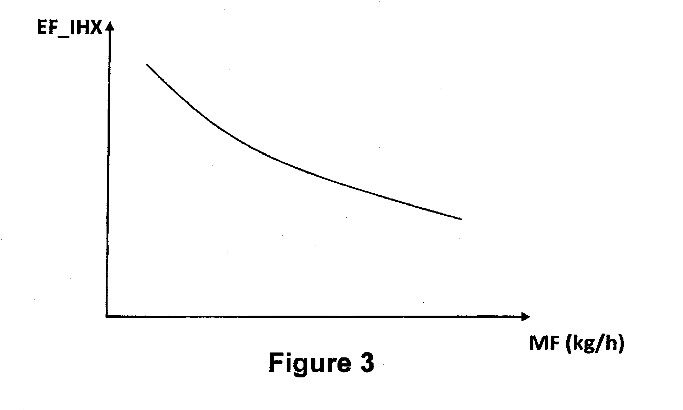

Le flux massique MF obtenu à l'étape E2 est également utilisé dans une étape E5 de détermination d'un paramètre d'efficacité EF_IHX de l'échangeur interne IHX. La détermination du paramètre d'efficacité EF_IHX de l'échangeur interne IHX est illustrée en figure 3 présentant une courbe montrant l'évolution de l'efficacité de l'échangeur interne IHX EF_IHX en fonction du flux massique MF.

Préalablement, en simultanée ou après l'étape E5, l'invention comprend une étape E6 d'estimation d'une température à la sortie de l'évaporateur TREVO_E à partir des caractéristiques de la surchauffe SH_E définie à l'étape E4 et de la pression estimée en sortie de l'évaporateur PREVO_E estimée à l'étape E3.

La pression estimée en sortie de l'évaporateur PREVO_E permet de définir la température de saturation Tsat correspondant à la pression estimée en sortie de l'évaporateur PREVO_E. Avantageusement, la température estimée à la sortie de l'évaporateur TREVO_E est donnée par la relation :

$$TREVO\_E = Tsat(PREVO\_E) + SH + \Delta SH.$$

Par suite, le procédé comprend une étape E7 d'estimation d'une température à l'entrée du compresseur TRCPI_E à partir du paramètre d'efficacité EF_IHX de l'échangeur interne IHX, la température estimée en sortie de l'évaporateur TREVO_E estimée à l'étape E6 et la température de saturation Tsat correspondant à la pression mesurée en sortie du condenseur PRCDO_M.

Dans une étape E8, la température estimée à l'entrée du compresseur TRCPI_E estimée à l'étape E7 est comparée à la température limite en entrée du compresseur TRCPI_L calculée à l'étape E1.

L'étape E8 détermine si la température à l'entrée du compresseur TRCPI_E est supérieure ou égale à la température limite en entrée du compresseur TRCPI_L.

Dans la négative, c'est-à-dire que la température à l'entrée du compresseur TRCPI_E n'est pas supérieure ou égale à la température limite en entrée du compresseur TRCPI_L (cas N de l'étape E8 de la figure 2), le procédé comprend, par défaut, une étape E9 de contrôle du compresseur CP. L'étape E9 se fait en fonction d'une température de l'air après la traversé de l'évaporateur $T_{EV}$. A la suite de l'étape E9, un signal de commande du compresseur $PWM_{CP}(k)$ est établi pour commander le compresseur CP, notamment pour commander la capacité du compresseur CP. Plus particulièrement, le signal de commande du compresseur $PWM_{CP}(k)$ est fonction de température de l'air après la traversé de l'évaporateur $T_{EV}$. Donc,

$$PWM_{CP}(k) = PWM_{CP}(T_{EV}).$$

Dans l'affirmative, c'est-à-dire que la température à l'entrée du compresseur TRCPI_E est supérieure ou égale à la température limite en entrée du compresseur TRCPI_L (cas O de l'étape E8 de la figure 2), le procédé comprend une étape E10 de contrôle du compresseur CP.

A l'étape E10, si la température à l'entrée du compresseur TRCPI_E est égale à la température limite à l'entrée du compresseur TRCPI_L, le signal de commande du compresseur est gardé constant. On a donc la relation suivante :

$$PWM_{CP}(k) = PWM_{CP}(k-1).$$

Dans le cas où la température à l'entrée du compresseur TRCPI_E est supérieure à la température limite à l'entrée du compresseur TRCPI_L, le procédé selon la présente invention prévoit deux solutions basées sur un même principe pour réaliser la commande du compresseur CP.

La première solution consiste en une commande directe d'un signal de commande du compresseur $PWM_{CP}$ décrémenté d'une valeur correspondant à la différence entre la température estimée à l'entrée du compresseur TRCPI_E et la température limite à l'entrée du compresseur TRCPI_L. On a donc la relation suivante:

$$PWM_{CP}(k) = PWM_{CP}(k-1) - K1*(TRCPI\_E - TRCPI\_L)$$

où K1 est un coefficient.

La seconde solution consiste en une commande directe d'une valeur de consigne de la température d'évaporation SP_T$_{EV}$ en utilisant la différence entre la température estimée à l'entrée du compresseur TRCPI_E et la température limite à l'entrée du compresseur TRCPI_L qui est alors négative. On a donc la relation suivante :

$$SP\_T_{EV}(k) = SP\_T_{EV}(k\text{-}1) + K2*(TRCPI\_E - TRCPI\_L).$$

où K2 est une coefficient.

La mise en oeuvre de la présente invention a permis d'obtenir, notamment, les résultats identifiés au tableau présenté en figure 4, dans lequel :

- PRCDO_M est la pression mesurée à la sortie du condenseur,
- TRCDI_M est la température mesurée à l'entrée du condenseur,
- PRCPI_M est la pression mesurée à l'entrée du compresseur, et
- TRCPI_M est la température mesurée à l'entrée du compresseur.

Le tableau de la figure 4 présente une série de mesures consistant à contrôler la température à l'entrée du condenseur TRCDI ou en sortie du compresseur TRCPO, à la valeur limite de 130°C. On constate que la valeur estimée de la température consiste en une commande directe et est très similaire à la valeur réelle mesurée. En tout cas, on observe que la température à l'entrée du compresseur TRCPI_E est très proche de la valeur mesurée et reste inférieure à la température limite à l'entrée du compresseur TRCPI_L. Ainsi, on peut savoir si la valeur de la température en entrée du condenseur TRCDI est inférieures à la valeur limite de 130°C.

Dans un second mode de réalisation de l'invention, le procédé comprend une étape de calcul d'une température limite à la sortie de l'évaporateur TREVO_L à partir du paramètre d'efficacité de l'échangeur EF_IHX, de la température limite à l'entrée du compresseur TRCPI_L et de la température de saturation à la pression en entrée du condenseur, de façon similaire au calcul de l'étape 6. On obtient donc la relation suivante :

$$TREVO\_L = Tsat(PREVO\_L) + SH + \Delta SH$$

Ensuite, sur la base de l'équation obtenue précédemment, une étape de calcul d'une pression limite en entrée du compresseur PRCPI_L est réalisée à partir d'une pression limite à la sortie de l'évaporateur PREVO_L et de la chute de pression estimée :

$$PRCPI\_L = PREVO\_L - \Delta P_{EV\_CP}.$$

Enfin, une étape de calcul de l'intensité limite du courant de commande de la vanne de contrôle du compresseur I$_V$_L est réalisée en fonction de la pression limite en entrée du compresseur PRCPI_L calculée :

$$I_V\_L = f(PRCPI\_L).$$

Dans cette réalisation, le contrôle de la boucle de climatisation modifie le signal de commande de la vanne du compresseur pour que l'intensité mesurée du courant de commande de la vanne de contrôle du compresseur CP soit inférieure à l'intensité limite du courant de commande de la vanne de contrôle du compresseur CP.

Une troisième réalisation est telle que le procédé comprend une étape d'estimation de la température à la sortie de l'évaporateur TREVO_E à partir de la température de saturation à la pression estimée en sortie de l'évaporateur Tsat(PREVO_E) et des caractéristiques de la surchauffe :

$$TREVO\_E = Tsat(PREVO\_E) + SH + \Delta SH.$$

Ensuite, une étape d'estimation d'une température limite à la sortie du condenseur TRCDO_L est réalisée à partir du paramètre d'efficacité EF_IHX de l'échangeur interne IHX, de la température à la sortie de l'évaporateur estimée TREVO_E et de la température limite à l'entrée du compresseur TRCPI_L.

Il suit ensuite une étape d'estimation d'une pression limite à la sortie du condenseur PRCDO_L à partir de la température limite à la sortie du condenseur TRCDO_L.

L'étape de modification de fonctionnement du compresseur est alors telle que le signal de commande du compresseur ou la valeur de consigne de la température d'évaporation est modifié(e) par décrémentation dès lors que la pression mesurée à la sortie du condenseur PRCDO_M est supérieure à pression limite à la sortie du condenseur PRCDO_L.

La modification de fonctionnement du compresseur peut donc être de la forme :

$$PWM_{CP}(k) = PWM_{CP}(k\text{-}1) - K3*(PRCDO\_M - PRCDO\_L)$$

ou

$$SP\_T_{EV}(k) = SP\_T_{EV}(k\text{-}1) + K4*(PRCDO\_M - PRCDO\_L)$$

où K3 et K4 sont des coefficients.

Dans le cas contraire, par défaut, le contrôle classique en fonction de la température d'évaporation est actif.

Bien évidemment, l'invention n'est pas limitée aux modes de réalisation décrits précédemment et fournis uniquement à titre d'exemple. Diverses mises en oeuvre peuvent être réalisées selon les principes de l'invention. Elle englobe diverses modifications, formes alternatives et autres variantes que pourra envisager l'homme du métier dans le cadre de la présente invention et notamment toutes combinaisons des différents modes de réalisation décrits précédemment.

**Revendications**

1.  Procédé de contrôle de la température de sortie (TRCPO) d'un compresseur (CP) intégré dans une boucle de climatisation d'un véhicule automobile dans laquelle circule un fluide frigorigène sous critique, et comprenant au moins un condenseur (CD), une vanne d'expansion (EXV) et un évaporateur (EV),
    **caractérisé en ce que** le procédé de contrôle comprend :

    - une étape de calcul d'une température limite à l'entrée du compresseur (TRCPI_L),
    - une étape d'estimation d'une température à l'entrée du compresseur (TRCPI_E), et
    - une étape de modification d'un signal de commande du compresseur (PWM$_{CP}$) ou d'une valeur de consigne de la température d'évaporation (SP_T$_{EV}$).

2.  Procédé de contrôle selon la revendication 1, **caractérisé en ce que** la boucle de climatisation comprend un échangeur interne (IHX) pour la réalisation d'échanges thermiques entre le fluide circulant entre le condenseur (CD) et la vanne d'expansion (EXV) et le fluide circulant entre l'évaporateur (EV) et le compresseur (CP).

3.  Procédé de contrôle selon la revendication 1 ou 2, **caractérisé en ce que** le procédé de contrôle comprend :

    - une étape d'acquisition d'une vitesse du véhicule (V$_V$), d'une température extérieure (T$_E$), et d'une pression mesurée en sortie du condenseur (PRCDO_M).

4.  Procédé de contrôle selon l'une des revendications 1 à 3, **caractérisé en ce que** le procédé de contrôle comprend :

    - une étape d'acquisition d'une pression à la sortie du condenseur (PRCDO_M), d'une pression estimée à l'entrée du compresseur (PRCPI_E), d'une vitesse du compresseur (N$_{CP}$_M) et d'une température limite prédéfinie à l'entrée du condenseur (TRCDI_L).

5.  Procédé de contrôle selon la revendication 4, **caractérisé en ce que** le procédé de contrôle comprend :

    - une étape d'acquisition d'une intensité du courant de commande de la vanne de contrôle du compresseur (I$_V$_M),

    et **en ce que** l'étape d'estimation de la pression à l'entrée du compresseur (PRCPI_E) est réalisée en fonction d'une intensité du courant de commande de la vanne de contrôle du compresseur (I$_V$_M).

**6.** Procédé de contrôle selon la revendication 4 ou 5, **caractérisé en ce que** l'étape de calcul de la température limite à l'entrée du compresseur (TRCPI_L) est réalisée en fonction de la pression estimée à l'entrée du compresseur (PRCPI_E), de la vitesse du compresseur ($N_{CP\_M}$), et de la température limite prédéfinie à l'entrée du condenseur (TRCDI_L).

**7.** Procédé de contrôle selon la revendication 6, **caractérisé en ce que** le procédé de contrôle comprend :

- une étape de détermination d'un paramètre d'efficacité (EF_IHX) de l'échangeur interne (IHX).

**8.** Procédé de contrôle selon la revendication 7, **caractérisé en ce que** l'étape de détermination du paramètre d'efficacité (EF_IHX) est réalisée en fonction d'un flux massique (MF) du fluide réfrigérant.

**9.** Procédé de contrôle selon la revendication 8, **caractérisé en ce que** le procédé de contrôle comprend :

- une étape de détermination du flux massique (MF) réalisée en fonction de la vitesse du véhicule ($V_V$), de la température extérieure ($T_E$), et de la pression mesurée en sortie du condenseur (PRCDO_M).

**10.** Procédé de contrôle selon la revendication 8 ou 9, **caractérisé en ce que** le procédé de contrôle comprend :

- une étape d'estimation d'une pression estimée à la sortie de l'évaporateur (PREVO_E) à partir de la pression estimée à l'entrée du compresseur (PRCPI_E) et du flux massique (MF) du fluide réfrigérant.

**11.** Procédé de contrôle selon l'une des revendications 7 à 10, **caractérisé en ce que** le procédé de contrôle comprend :

- une étape d'estimation d'une chute de pression ($\Delta P_{EV\_CP}$) entre la sortie de l'évaporateur (EV) et l'entrée du compresseur (CP) à partir du flux massique (MF) du fluide réfrigérant.

**12.** Procédé de contrôle selon la revendication 11, **caractérisé en ce que** l'étape d'estimation de la pression à la sortie de l'évaporateur (PREVO_E) est réalisée en fonction de la chute de pression ($\Delta P_{EV\_CP}$) et de la pression estimée à l'entrée du compresseur (PRCPI_E).

**13.** Procédé de contrôle selon la revendication 10, ou la revendication 11 ou 12, prise en combinaison avec la revendication 10, **caractérisé en ce que** le procédé de contrôle comprend :

- une étape de détermination de caractéristiques de surchauffe (SH_E) en fonction de la pression estimée à la sortie de l'évaporateur (PREVO_E).

**14.** Procédé selon la revendication 13, **caractérisé en ce que** le procédé de contrôle comprend :

- une étape d'estimation de la température à la sortie de l'évaporateur (TREVO_E) à partir de caractéristiques de surchauffe (SH_E) et de la pression estimée en sortie de l'évaporateur (PREVO_E).

**15.** Procédé de contrôle selon la revendication 13 ou 14, prise en combinaison avec la revendication 12, **caractérisé en ce que** le procédé de contrôle comprend ;

- une étape de calcul d'une température limite à la sortie de l'évaporateur (TREVO_L) à partir du paramètre d'efficacité de l'échangeur (EF_IHX), de la température limite à l'entrée du compresseur (TRCPI_L) et de la température de saturation à la pression en entrée du condenseur (Tsat(PRCDI_M)),
- une étape de calcul d'une pression limite à la sortie de l'évaporateur (PREVO_L) à partir de la température limite à la sortie de l'évaporateur (TREVO_L) et des caractéristiques de la surchauffe (SH_E),
- une étape de calcul d'une pression limite en entrée du compresseur (PRCPI_L) à partir de la pression limite à la sortie de l'évaporateur (PREVO_L) et de la chute de pression estimée ($\Delta P_{EV\_CP}$), et
- une étape de calcul d'une valeur limite de l'intensité du courant de commande de la vanne de contrôle du compresseur ($I_V\_L$) en fonction de la pression limite en entrée du compresseur (PRCPI_L).

**16.** Procédé de contrôle selon l'une des revendications 13 à 15, **caractérisé en ce que** le procédé de contrôle comprend :

- une étape d'estimation de la température à la sortie de l'évaporateur (TREVO_E) à partir d'une température de saturation à la pression estimée en sortie de l'évaporateur (Tsat(PREVI_E)) et des caractéristiques de la surchauffe (SH_E),

- une étape d'estimation d'une température limite à la sortie du condenseur (TRCDO_L) à partir du paramètre d'efficacité (EF_IHX), de la température à la sortie de l'évaporateur estimée (TREVO_E) et de la température limite à l'entrée du compresseur (TRCPI_L), et

- une étape d'estimation d'une pression limite à la sortie du condenseur (PRCDO_L) à partir de la température limite à la sortie du condenseur (TRCDO_L).

17. Procédé de contrôle selon l'une des revendications précédentes, **caractérisé en ce que** l'étape de modification est telle que le signal de commande du compresseur (PWM$_{CP}$) ou la valeur de consigne de la température d'évaporation (SP_T$_{EV}$) est modifiée dès lors que la température à l'entrée du compresseur estimée (TRCPI_E) est supérieure ou égale à la température limite à l'entrée du compresseur calculée (TRCPI_L).

18. Procédé de contrôle selon la revendication 15, **caractérisé en ce que** l'étape de modification est telle que le signal de commande pour la vanne de contrôle du compresseur est modifiée pour que l'intensité du courant de commande de la vanne de contrôle du compresseur (I$_V$_M) soit toujours inférieure à la valeur limite de l'intensité du courant de commande de la vanne de contrôle du compresseur (I$_V$_L).

19. Procédé de contrôle selon la revendication 16, **caractérisé en ce que** l'étape de modification est telle que le signal de commande du compresseur (PWM$_{CP}$) ou la valeur de consigne de la température d'évaporation (SP_T$_{EV}$) est modifiée dès lors que la pression à la sortie du condenseur (PRCDO_M) est supérieure ou égale à la pression limite à la sortie du condenseur (PRCDO_L).

**Patentansprüche**

1. Verfahren zur Steuerung der Ausgangstemperatur (TRCPO) eines Kompressors (CP), der in einem Klimatisierungskreislauf eines Kraftfahrzeugs integriert ist, in dem ein unterkritisches Kältemittel zirkuliert, und der mindestens einen Kondensator (CD), einen Expansionsschieber (EXV) und einen Verdampfer (EV) umfasst, **dadurch gekennzeichnet, dass** das Steuerverfahren Folgendes umfasst:

   - einen Berechnungsschritt einer Grenztemperatur an dem Eingang des Kompressors (TRCPI_L),
   - einen Schätzungsschritt einer Temperatur an dem Eingang des Kompressors (TRCPI_E) und
   - einen Änderungsschritt eines Steuersignals des Kompressors (PWM$_{CP}$) oder eines Sollwerts der Verdampfungstemperatur (SP_T$_{EV}$).

2. Steuerverfahren nach Anspruch 1, **dadurch gekennzeichnet, dass** der Klimatisierungskreislauf einen internen Wärmeaustauscher (IHX) zur Herstellung von Wärmeaustauschen zwischen dem Fluid, das zwischen dem Kondensator (CD) und dem Expansionsschieber (EXV) zirkuliert, und dem Fluid, das zwischen dem Verdampfer (EV) und dem Kompressor (CP) zirkuliert, umfasst.

3. Steuerverfahren nach Anspruch 1 oder 2, **dadurch gekennzeichnet, dass** das Steuerverfahren Folgendes umfasst:

   - einen Erfassungsschritt einer Geschwindigkeit des Fahrzeugs (V$_V$), einer Außentemperatur (T$_E$) und eines an dem Ausgang des Kondensators gemessenen Drucks (PRCDO_M).

4. Steuerverfahren nach einem der Ansprüche 1 bis 3, **dadurch gekennzeichnet, dass** das Steuerverfahren Folgendes umfasst:

   - einen Erfassungsschritt eines Drucks an dem Ausgang des Kondensators (PRCDO_M), eines geschätzten Drucks an dem Eingang des Kompressors (PRCPI_E), einer Drehzahl des Kompressors (N$_{CP}$_M) und einer vordefinierten Grenztemperatur am Eingang des Kondensators (TRCDI_L).

5. Steuerverfahren nach Anspruch 4, **dadurch gekennzeichnet, dass** das Steuerverfahren Folgendes umfasst:

   - einen Erfassungsschritt einer Stärke des Steuerstroms des Steuerschiebers des Kompressors (I$_V$_M),

   und dadurch, dass der Schätzungsschritt des Drucks am Eingang des Kompressors (PRCPI_E) in Abhängigkeit von einer Stärke des Steuerstroms des Steuerschiebers des Kompressors ($I_V\_M$) ausgeführt wird.

6. Steuerverfahren nach Anspruch 4 oder 5, **dadurch gekennzeichnet, dass** der Berechnungsschritt der Grenztemperatur am Eingang des Kompressors (TRCPI_L) in Abhängigkeit von dem am Eingang des Kompressors geschätzten Druck (PRCPI_E), der Drehzahl des Kompressors ($N_{CP}\_M$) und der Grenztemperatur, die am Eingang des Kondensators vordefiniert ist (TRCDI_L), ausgeführt wird.

7. Steuerverfahren nach Anspruch 6, **dadurch gekennzeichnet, dass** das Steuerverfahren Folgendes umfasst:

   - einen Bestimmungsschritt eines Effizienzparameters (EF_IHX) des internen Wärmeaustauschers (IHX).

8. Steuerverfahren nach Anspruch 7, **dadurch gekennzeichnet, dass** der Bestimmungsschritt des Effizienzparameters (EF_IHX) in Abhängigkeit von einem Massenstrom (MF) des Kühlmittels ausgeführt wird.

9. Steuerverfahren nach Anspruch 8, **dadurch gekennzeichnet, dass** das Steuerverfahren Folgendes umfasst:

   - einen Bestimmungsschritt des Massenstroms (MF), der in Abhängigkeit von der Geschwindigkeit des Fahrzeugs ($V_V$), der Außentemperatur ($T_E$) und dem am Ausgang des Kondensators gemessenen Druck (PRCDO_M) ausgeführt wird.

10. Steuerverfahren nach Anspruch 8 oder 9, **dadurch gekennzeichnet, dass** das Steuerverfahren Folgendes umfasst:

    - einen Schätzungsschritt eines Drucks, der an dem Ausgang des Verdampfers (PREVO_E) ausgehend von dem an dem Eingang des Verdichters (PRCPI_E) geschätzten Druck und dem Massenstrom (MF) des Kühlmittels geschätzt wird.

11. Steuerverfahren nach einem der Ansprüche 7 bis 10, **dadurch gekennzeichnet, dass** das Steuerverfahren Folgendes umfasst:

    - einen Schätzungsschritt eines Druckabfalls ($\Delta P_{EV\_CP}$) zwischen dem Ausgang des Verdampfers (EV) und dem Eingang des Kompressors (CP) ausgehend von dem Massenstrom (MF) des Kühlmittels.

12. Steuerverfahren nach Anspruch 11, **dadurch gekennzeichnet, dass** der Schätzungsschritt des Drucks am Ausgang des Verdampfers (PREVO_E) in Abhängigkeit von dem Druckabfall ($\Delta P_{EV\_CP}$) und dem an dem Eingang des Kompressors geschätzten Druck (PRCPI_E) ausgeführt wird.

13. Steuerverfahren nach Anspruch 10 oder Anspruch 11 oder 12, kombiniert mit Anspruch 10 genommen, **dadurch gekennzeichnet, dass** das Steuerverfahren Folgendes umfasst:

    - einen Bestimmungsschritt von Überhitzungsmerkmalen (SH_E) in Abhängigkeit von dem am Ausgang des Verdampfers geschätzten Druck (PREVO_E).

14. Verfahren nach Anspruch 13, **dadurch gekennzeichnet, dass** das Steuerverfahren Folgendes umfasst:

    - einen Schätzungsschritt der Temperatur am Ausgang des Verdampfers (TREVO_E) ausgehend von Überhitzungsmerkmalen (SH_E) und dem am Ausgang des Verdampfers geschätzten Druck (PREVO_E).

15. Steuerverfahren nach Anspruch 13 oder 14, kombiniert mit Anspruch 12 genommen, **dadurch gekennzeichnet, dass** das Steuerverfahren Folgendes umfasst:

    - einen Berechnungsschritt einer Grenztemperatur an dem Ausgang des Verdampfers (TREVO_L) ausgehend von dem Effizienzparameter des Wärmeaustauschers (EF_IHX), der Grenztemperatur an dem Eingang des Kompressors (TRCPI_L) und der Sättigungstemperatur an dem Druck am Eingang des Kondensators (Tsat(PRCDI_M)),
    - einen Berechnungsschritt eines Grenzdrucks an dem Ausgang des Verdampfers (PREVO_L) ausgehend von der Grenztemperatur an dem Ausgang des Verdampfers (TREVO_L) und Merkmalen der Überhitzung (SH_E),
    - einen Berechnungsschritt eines Grenzdrucks am Eingang des Kompressors (PRCPI_L) ausgehend von dem Grenzdruck an dem Ausgang des Verdampfers (PREVO_L) und dem geschätzten Druckabfall ($\Delta P_{EV\_CP}$), und

- einen Berechnungsschritt eines Grenzwerts der Steuerstromstärke des Steuerschiebers des Kompressors ($I_V$_L) in Abhängigkeit von dem Grenzdruck am Eingang des Kompressors (PRCPI_L).

16. Steuerverfahren nach einem der Ansprüche 13 bis 15, **dadurch gekennzeichnet, dass** das Steuerverfahren Folgendes umfasst:

- einen Schätzungsschritt der Temperatur an dem Ausgang des Verdampfers (TREVO_E) ausgehend von einer Sättigungstemperatur an dem am Ausgang des Verdampfers geschätzten Druck (Tsat(PREVI_E)) und Merkmalen der Überhitzung (SH_E),
- einen Schätzungsschritt einer Grenztemperatur an dem Ausgang des Kondensators (TRCDO_L) ausgehend von dem Effizienzparameter (EF_IHX), der geschätzten Temperatur an dem Ausgang des Verdampfers (TREVO_E) und der Grenztemperatur an dem Eingang des Kompressors (TRCPI_L), und
- einen Schätzungsschritt eines Grenzdrucks an dem Ausgang des Kondensators (PRCDO_L) ausgehend von der Grenztemperatur an dem Ausgang des Kondensators (TRCDO_L).

17. Steuerverfahren nach einem der vorhergehenden Ansprüche, **dadurch gekennzeichnet, dass** der Änderungsschritt derart ist, dass das Steuersignal des Kompressors ($PWM_{CP}$) oder der Sollwert der Verdampfungstemperatur ($SP\_T_{EV}$) geändert wird, sobald die geschätzte Temperatur an dem Eingang des Kompressors (TRCPI_E) höher oder gleich wie die berechnete Grenztemperatur an dem Eingang des Kompressors (TRCPI_L) ist.

18. Steuerverfahren nach Anspruch 15, **dadurch gekennzeichnet, dass** der Änderungsschritt derart ist, dass das Steuersignal für den Steuerschieber des Kompressors geändert wird, so dass die Stärke des Steuerstroms des Steuerschiebers des Kompressors ($I_V$_M) immer niedriger ist als der Grenzwert der Stärke des Steuerstroms des Steuerschiebers des Kompressors ($I_V$_L).

19. Steuerverfahren nach Anspruch 16, **dadurch gekennzeichnet, dass** der Änderungsschritt derart ist, dass das Steuersignal des Kompressors ($PWM_{CP}$) oder der Sollwert der Verdampfungstemperatur ($SP\_T_{EV}$) geändert wird, sobald der Druck an dem Ausgang des Kondensators (PRCDO_M) größer oder gleich ist wie der Grenzdruck an dem Ausgang des Kondensators (PRCDO_L).

**Claims**

1. Method for controlling the output temperature (TRCPO) of a compressor (CP) incorporated in an air-conditioning loop of a motor vehicle in which a sub-critical refrigerant circulates, and comprising at least one condenser (CD), one expansion valve (EXV) and one evaporator (EV), **characterized in that** the control method comprises:

- a step of calculating a limit temperature at the input of the compressor (TRCPI_L),
- a step of estimating a temperature at the input of the compressor (TRCPI_E), and
- a step of modifying a control signal of the compressor ($PWM_{CP}$) or a set point value of the evaporation temperature ($SP\_T_{EV}$).

2. Control method according to Claim 1, **characterized in that** the air-conditioning loop comprises an internal exchanger (IHX) for producing heat exchanges between the fluid circulating between the condenser (CD) and the expansion valve (EXV) and the fluid circulating between the evaporator (EV) and the compressor (CP).

3. Control method according to Claim 1 or 2, **characterized in that** the control method comprises:

- a step of acquiring a speed of the vehicle ($V_V$), an outside temperature ($T_E$) and a pressure measured at the output of the condenser (PRCDO_M).

4. Control method according to one of Claims 1 to 3, **characterized in that** the control method comprises:

- a step of acquiring a pressure at the output of the condenser (PRCDO_M), an estimated pressure at the input of the compressor (PRCPI_E), a speed of the compressor ($N_{CP}$_M) and a predefined limit temperature at the input of the condenser (TRCDI_L).

5. Control method according to Claim 4, **characterized in that** the control method comprises:

- a step of acquiring an intensity of the control current of the control valve of the compressor ($I_V\_M$),

and **in that** the step of estimating the pressure at the input of the compressor (PRCPI_E) is performed as a function of an intensity of the control current of the control valve of the compressor ($I_V\_M$).

6. Control method according to Claim 4 or 5, **characterized in that** the step of calculating the limit temperature at the input of the compressor (TRCPI_L) is performed as a function of the estimated pressure at the input of the compressor (PRCPI_E) of the speed of the compressor ($N_{CP}\_M$), and of the predefined limit temperature at the input of the condenser (TRCDI_L).

7. Control method according to Claim 6, **characterized in that** the control method comprises:

- a step of determining an efficiency parameter (EF_IHX) of the internal exchanger (IHX).

8. Control method according to Claim 7, **characterized in that** the step of determining the efficiency parameter (EF_IHX) is performed as a function of a mass flow (MF) of the refrigerant.

9. Control method according to Claim 8, **characterized in that** the control method comprises:

- a step of determining the mass flow (MF) performed as a function of the speed of the vehicle ($V_V$), of the outside temperature ($T_E$), and of the pressure measured at the output of the condenser (PRCDO_M).

10. Control method according to Claim 8 or 9, **characterized in that** the control method comprises:

- a step of estimating an estimated pressure at the output of the evaporator (PREVO_E) from the estimated pressure at the input of the compressor (PRCPI_E) and the mass flow (MF) of the refrigerant.

11. Control method according to one of Claims 7 to 10, **characterized in that** the control method comprises:

- a step of estimating a pressure drop ($\Delta P_{EV\_CP}$) between the output of the evaporator (EV) and the input of the compressor (CP) from the mass flow (MF) of the refrigerant.

12. Control method according to Claim 11, **characterized in that** the step of estimating the pressure at the output of the evaporator (PREVO_E) is performed as a function of the pressure drop ($\Delta P_{EV\_CP}$) and of the estimated pressure at the input of the compressor (PRCPI_E).

13. Control method according to Claim 10, or Claim 11 or 12, taken in combination with Claim 10, **characterized in that** the control method comprises:

- a step of determining overheating characteristics (SH_E) as a function of the estimated pressure at the output of the evaporator (PREVO_E).

14. Method according to Claim 13, **characterized in that** the control method comprises:

- a step of estimating the temperature at the output of the evaporator (TREVO_E) from overheating characteristics (SH_E) and from the estimated pressure at the output of the evaporator (PREVO_E).

15. Control method according to Claim 13 or 14, taken in combination with Claim 12, **characterized in that** the control method comprises:

- a step of calculating a limit temperature at the output of the evaporator (TREVO_L) from the efficiency parameter of the exchanger (EF_IHX), the limit temperature at the input of the compressor (TRCPI_L) and the saturation temperature at the pressure at the input of the condenser (Tsat(PRCDI_M)),
- a step of calculating a limit pressure at the output of the evaporator (PREVO_L) from the limit temperature at the output of the evaporator (TREVO_L) and the overheating characteristics (SH_E),
- a step of calculating a limit pressure at the input of the compressor (PRCPI_L) from the limit pressure at the output of the evaporator (PREVO_L) and the estimated pressure drop ($\Delta P_{EV\_CP}$), and
- a step of calculating a limit value of the intensity of the control current of the control valve of the compressor ($I_V$_L) as a function of the limit pressure at the input of the compressor (PRCPI_L).

16. Control method according to one of Claims 13 to 15, **characterized in that** the control method comprises:

- a step of estimating the temperature at the output of the evaporator (TREVO_E) from a saturation temperature at the estimated pressure at the output of the evaporator (Tsat(PREVI_E)) and the overheating characteristics (SH_E),
- a step of estimating a limit temperature at the output of the condenser (TRCDO_L) from the efficiency parameter (EF_IHX), the estimated temperature at the output of the evaporator (TREVO_E) and the limit temperature at the input of the compressor (TRCPI_L), and
- a step of estimating a limit pressure at the output of the condenser (PRCDO_L) from the limit temperature at the output of the condenser (TRCDO_L).

17. Control method according to one of the preceding claims, **characterized in that** the modification step is such that the control signal of the compressor (PWM_CP) or the set point value of the evaporation temperature (SP_$T_{EV}$) is modified from the moment that the estimated temperature at the input of the compressor (TRCPI_E) is higher than or equal to the calculated limit temperature at the input of the compressor (TRCPI_L).

18. Control method according to Claim 15, **characterized in that** the modification step is such that the control signal for the control valve of the compressor is modified for the intensity of the control current of the control valve of the compressor ($I_V$_M) to be always below the limit value of the intensity of the control current of the control valve of the compressor ($I_V$_L).

19. Control method according to Claim 16, **characterized in that** the modification step is such that the control signal of the compressor (PWM_CP) or the set point value of the evaporation temperature (SP_$T_{EV}$) is modified from the moment that the pressure at the output of the condenser (PRCDO_M) is higher than or equal to the limit pressure at the output of the condenser (PRCDO_L).

Figure 1

| PRCDO_M / TRCDI_M | PRCPI_M | TRCPI_M | SH | EF_IHX | Tsat(PRCDO) | TREVO_E | TRCPI_E | TRCPI_L |
|---|---|---|---|---|---|---|---|---|
| 17 bars/128°C | 3 bars | 43°C | 0,1 | 0,72 | 60,5°C | 0,7°C | 44°C | 48,4°C |
| 20,5 bars/126°C | 4,5 bars | 53,4°C | 0,2 | 0,73 | 68,6°C | 12,5°C | 53,5°C | 57,65°C |
| 25,2 bars/123°C | 3,9 bars | 37,2°C | 0,1 | 0,447 | 77,9°C | 8,2°C | 39,4°C | 43°C |

Figure 4

**Figure 2**

**Figure 3**